# EUROPEAN PATENT APPLICATION

(11) **EP 1 300 752 A1**
(43) Date of publication of application: **09.04.2003**
(21) Application number: 02292484.9
(22) Date of filing: 08.10.2002
(51) Int. Cl.: G06F 3/033

(54) **Screen management system**

(30) Priority: 08.10.2001 NL 1019129
(71) Applicant: THALES NEDERLAND B.V., 7550 GD Hengelo (NL)
(72) Inventor: Jacobs, Hans Michael, Thales Intellectuel Property, 94117 Arcueil cedex (FR); Müller, Thomas John, Thales Intellectuel Property, 94117 Arcueil cedex (FR)
(74) Representative: Lucas, Laurent Jacques

(57) **Abstract**

This invention proposes an apparatus in order to save screen space and to have a well-organised screen.

The apparatus for managing the screen space of a display screen comprises:
- a storage medium which comprises at least one primary tab and or each primary tab at least one associated element,
- a display means which displays at least one of the stored primary tabs on the display screen,
- a selection means to allow the selection of at least one of the displayed primary tab so that if a primary tab is selected, its associated element is displayed.

## Description

This invention relates to a screen space management apparatus and the method therefore. It relates also to an information display system. It could be used, for example, by computer based training systems. More generally, it could be used by any system that needs to display a great number of information at the same time or at a moment's notice wile still keeping a convenient arrangement.

There are many ways to conceive computer based training or learning systems. These systems have in common to present a lot of information to the users, usually students, at the same time or almost the same time. This information presentation needs a lots of screen space. Moreover this information should be easy to learn for the user. So it's not possible to make a closely displayed information presentation. It's possible to produce a high size screen, but there are limited in size and expensive. In the same idea, for some application, if you want to display all the windows linked all together, you need more than one screen. This solution is also expensive and complex to realise because you need to synchronise information which is shared by both screens. The lack of screen space for display systems is a real problem for all computer based training systems.

The existing systems to save screen space usually allow switching from a window to an icon and vice-versa. But, with such systems, the display screen has many windows and icons which are displayed anywhere on the display screen. The icons are usually not organised or only as the user decides at a given time. The window's organisation obey the same (no) rules. So, with this kind of system, there is an organisational problem. Furthermore, the windows which comprise complementary information are linked all together in order to be displayed at the same time or almost at the same time. But, none of the existing systems do take into account the link between the windows to save screen space.

One aim of this invention is particularly to solve the above-mentioned drawbacks.

For this purpose, this invention proposes an apparatus for managing the screen space on a display screen, this apparatus comprises:
- a storage medium which comprises at least one primary tab and or each primary tab at least one associated element,
- a display means which displays at least one of the stored primary tab on the display screen,
- a selection means to allow the selection of at least one of the displayed primary tab so that if a primary tab is selected, its associated element is displayed.

Furthermore, the primary tab is displayed on one of the edge of display screen in order to occupy less screen space.

Furthermore, the associated element is displayed in such way that it masks at least his associated primary tab.

Furthermore, the storage medium comprises at least a principal window linked to at least one of the stored primary tabs and its associated elements and the display means displays the principal window linked to the displayed tab or associated element in the centre area of the display screen.

Furthermore, the associated element comprises a return part and the selection means allows the selection of at least this said return part so that if this said return part is selected, the display means does not display the associated element anymore and displays its primary tab again.

Furthermore, the associated element is a secondary window or a set of secondary tabs and its return part is, respectively, a closing part or a return tab.

Furthermore, this invention is related to a system for displaying information which comprises at least a display screen and the above-mentioned apparatus for screen space management.

Furthermore, this information display system is used in a computer based training system.

Further features and advantages of the invention will be apparent from the following description of examples of embodiments of the invention with reference to the drawing, which shows some details of the invention, and from the claims. The individual details may be realised in an embodiment of the invention either severally or jointly in any combination.

The drawings are given as examples and show:
- Figure 1, a display screen with primary tabs before the selection of one of them,
- Figure 2a and 2b, a display screen with displayed associated element after the selection of one of the primary tab, the associated element is a secondary window on figure 2a and a plurality of secondary tabs on figure 2b,
- Figure 3, a block diagram of an example of a screen space management apparatus.

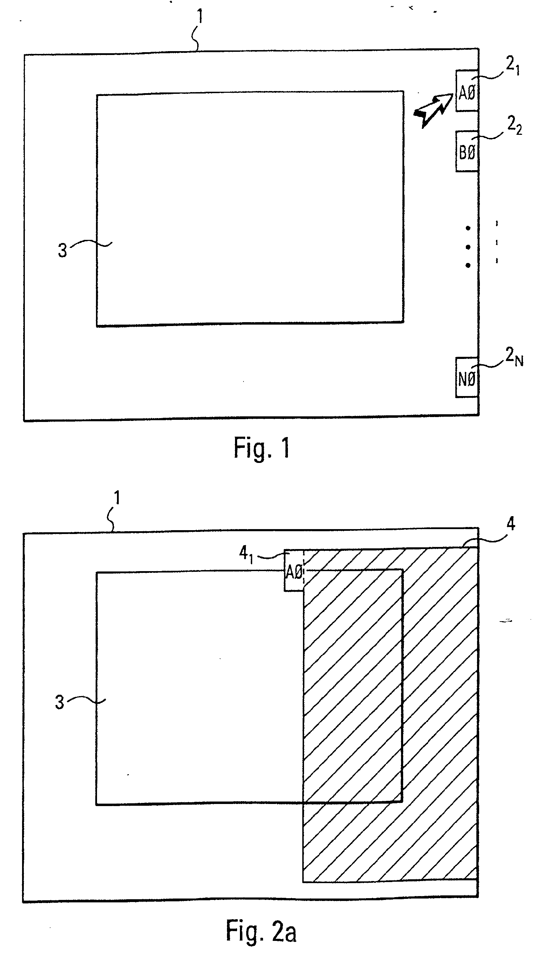

Figure 1 shows an example of the result of the space screen management by the apparatus according to the invention. On one of the edge of the display screen 1 are displayed a plurality of primary tabs {2₁, 2₂ ... 2_{N}} and a principal window 3 is displayed in the centre area of the display screen 1.

In a second embodiment a principal audio file is played instead of principal window 3. In a third embodiment, the audio file played is linked to the displayed principal window 3. In any of this embodiment, primary tabs 2 can be displayed not only on one of the four edges of the display screen 1 but on two or more edge or in any else given area(s) on the display screen 1. At a given time, both displayed window 3 and/or played audio file and displayed primary tabs 2 are linked all together.

Thanks to this link between the principal windows 3 and/or the principal audio file with primary tabs, all the complementary information to this principal windows 3 and/or audio file comprised in any secondary windows 4 could be find easily by the user by selecting one of the displayed linked primary tabs 2 and then, eventually, a secondary tab 4 in order to access this complementary information.

In the example shown on figure 2a, the primary tab 2₁ is associated with the associated element 4, which is a secondary window here. In this example by the selection of the primary tab 2₁ of figure 1, the secondary window 4 has been displayed masking all the previous displayed primary tabs 2 of that edge.

Secondary window 4 could also have masked only the associated primary tab 2₁ or only part of the previous displayed primary tabs or the whole screen.

The associated element 4 comprises a return part 4₁, which allows by selecting it to slide-in or disappearing the associated element 4 and come back to figure 1. The return part 4₁ may be only a part of the associated element 4 as shown on this figure 2a or the whole associated element 4. In this second option, by selecting on any inactive part of the associated element 4, this associated element will slide back or disappear.

Each primary tabs 2 can have a label : A0, B0...N0 so that it's easier for the user to recover the needed information comprised in the associated element 4 and for the screen space apparatus to organise the primary tabs 2 on the display screen 1. The return part 4₁ may have the same label as the selected primary tab 2₁.

If a principal audio file comprises spoken text, one of the primary displayed tabs 2 can be associated to a element 4 which is a secondary window comprising this spoken text.

If some primary tabs are still displayed even if an associated element 4 is already displayed, other primary tabs can be selected and a plurality of element 4 associated to different primary tabs 2 can be displayed at the same time. In order to optimise the screen space management, the apparatus, according to the invention, can allow a given number of associated element 4 to be displayed at the same time or limit the number of associated elements 4 displayed according to the space occupied on the screen by these elements.

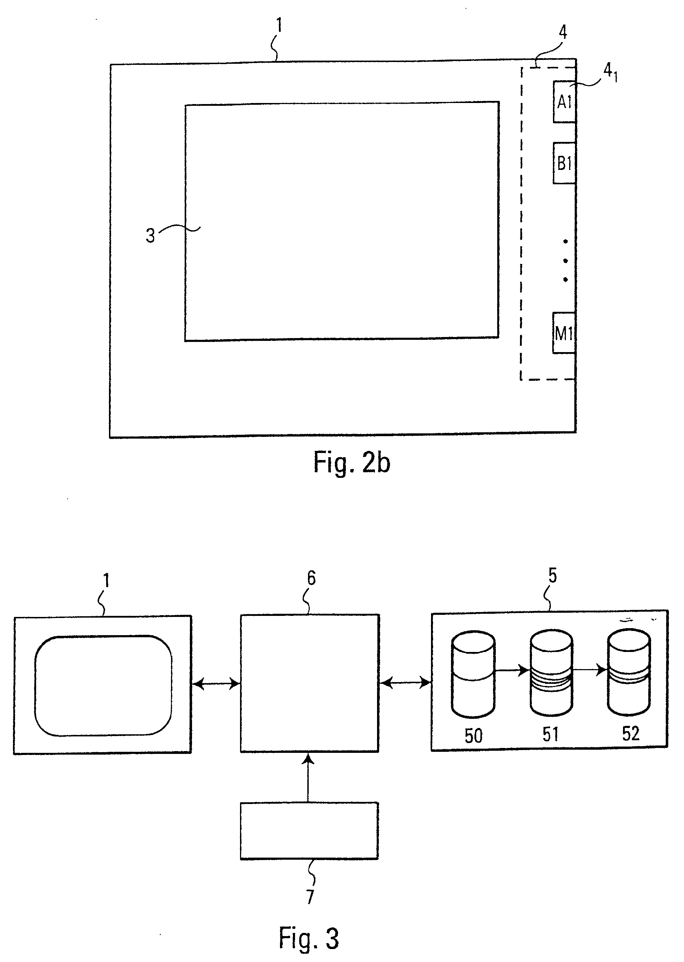

To have a clear and well-organised screen, the element 4 associated to one of the primary tabs 2, B0 as for an example, can be a set of secondary tabs 4 as shown on figure 2b. Each secondary tabs can have a label : A1, B1...M1 so that it's easier for the user to recover the needed information comprised in its associated element 4. The secondary tabs' associated element 4 can be a third level of window or a set of third level tabs as well. Instead the third level of level window slide in the screen by selecting the appropriated tab, a determined area of the screen can be used to display this third level window whatever which secondary tab A1 to M1 has been selected. The screen space management apparatus can -use these secondary tabs 4, for example, if the number of primary tabs to be displayed at the same time on the display screen 1 are too high. This two level of tabs are easier to use because there is no risk of mis-selection of one tab as in prior art where you should maintain the selection of the primary tab while choosing the secondary tab. One of the secondary tabs could be the return part 4₁ of the associated element 4 so that, by selecting it, the set of secondary tabs 4 disappear from the display screen 1 and the primary tabs are displayed again. Figure 2b shows a two-level tabs screen space management, a higher-level tabs screen space management is realised on the same scheme.

As shown on figure 2a, the associated element 4 mask part of the principal window 3 but it could have masked it totally or not at all as shown on figure 2b.

Figure 3 shows, as an example, a block diagram of a screen space management apparatus. The storage medium 5 comprises at least principal windows file 50, primary tabs file 51 and associated elements file 52. The primary tabs of the file 51 could be linked to at least one of the principal window of file 50 or at least one of the principal audio file (not shown on this figure) stored in the storage medium 5 or another storage medium (not shown on this figure). The file 52 can be seen as divided in two parts: a first part comprising associated elements 4 which are secondary windows and a second part comprising associated elements 4 which are sets of secondary tabs. Each element of the file 52 are associated to at least one of the primary tab of file 51 or one of the secondary tab of file 52.

This example of apparatus for managing the screen space of a display screen 1 comprises a storage medium 5 comprising at least one primary tab 2 and, for each primary tab, at least one associated element 4, a display means 6 which displays at least one of the stored primary tab 2 on the display screen 1, a selection means 7 to allow the selection of at least one of the displayed primary tab 2 so that if a primary tab is selected, its associated element 4 is displayed. The display means 6 could display the principal window 3 linked to the displayed tab 2 or associated element 4 in the centre area of the display screen 1. The selection means 7 allows the selection of at least the return part 4₁ of the displayed associated element 4 so that if this said return part 4₁ is selected, the display means 6 does not display the associated element 4 anymore and displays its primary tab 2 again.

So the selection means 7 allows the user to select one of the displayed primary 2 or secondary 4 tabs or the return part 4₁ of one of the displayed associated element 4. By this selection, the display means 6 display on the display screen 1 the associated element 4 if a tab has been selected, or display the associated tabs again if the return part 4₁ has been selected.

The audio player and the synchroniser between the audio player and the display means are not shown by this figure. They are used to play audio file(s) when displaying a given text, picture or video in one of the principal 3 or secondary 4 windows.

In any case, the space screen management apparatus could be able to swap a selected secondary window with the principal window.

This screen space management have several application possibilities: computer based training (CBT), television, any apparatus with displays and control panel(s)...

For example, in CBT, the principal windows could be used to give the essential information for the training or a picture from the apparatus to be trained, the tabs are associated to windows which can reproduce an overview from the lesson, give some help information, shows the made mistake(s), warns, reproduces the panel board from the apparatus to be trained, displays separate videos...

For television, tabs can be used to have the possibilities to have more than one channel on the screen, to display the electronic program guide (EPG)...

For any display apparatus (like radar display...), instead of real panel board to control the apparatus and/or the display, the tabs can be used to have virtual well-organised panel board(s).

## Claims

1. An apparatus for managing the screen space of a display screen 1, **characterised in that** this apparatus comprises :
- a storage medium 5 which comprises at least one primary tab 2 and for each primary tab 2 at least one associated element 4,
- a display means 6 which displays at least one of the stored primary tab 2 on the display screen 1,
- a selection means 7 to allow the selection of at least one of the displayed primary tab 2 so that if a primary tab 2 is selected, its associated element 4 is displayed.

2. An apparatus according to claim 1 **characterised in that** the primary tab 2 are displayed on one of the edge of display screen 1.

3. An apparatus according to anyone of claim 1 or 2 **characterised in that** the associated element 4 is displayed in such way that it masks at least his associated primary tab 2.

4. An apparatus according to anyone of claim 1 to 3 **characterised in that**:
- the storage medium 5 comprises at least a principal window 3 linked to at least one of the stored primary tab 2 and its associated element 4,
- the display means 6 displays the principal window 3 linked to the displayed tab 2 or associated element 4 in the centre area of the display screen 1.

5. An apparatus according to anyone of claims 1 to 4 **characterised in that**:
- the associated element 4 comprises a return parts 4₁,
- the selection means 7 allows the selection of at least this said return part 4₁ so that if this said return part 4₁ is selected, the display means 6 does not display the associated element 4 anymore and displays its primary tab 2 again.

6. An apparatus according to anyone of claims 1 to 5 **characterised in that** the associated element 4 is a secondary window or a plurality of secondary tabs and its return part 4₁ is, respectively, a closing part or a return tab.

7. An method of screen space management **characterised by** the following steps:
- displaying at least one primary tab 2 on the display screen 1,
- selecting a primary tab 2,
- displaying on the display screen 1 an element 4 associated to the selected primary tab 2.

8. A method according to claim 7 **characterised in that** the primary tab 2 are displayed on one of the edge of display screen 1.

9. A method according to anyone of claim 7 or 8 **characterised in that** the associated element 4 is displayed in such way that it masks at least his associated primary tab 2.

10. A method according to anyone of claim 7 to 9 **characterised by** displaying in the centre area of the display screen 1 a principal window 3 linked to the displayed tab(s) 2.

11. A method according to claims 7 to 10 **characterised by** the following steps:
- selecting the return part 4₁ of the displayed associated element 4,
- erasing the associated element 4 whose return part 4₁ has been selected from the display screen 1,
- displaying the tab 2 associated to this selected element 4 again.

12. A method according to anyone of claims 7 to 11 **characterised in that** the associated element 4 is a secondary window or a plurality of secondary tabs and its return part 4₁ is, respectively, a closing part or a return tab.

13. A system for displaying information which comprises at least a display screen 1 and an apparatus for screen space management according to anyone of claim 1 to 6.

14. A system according to the preceding claim **characterised in that** it is used in a computer based training system.
